# EUROPEAN PATENT APPLICATION

(11) **EP 2 392 991 A1**
(43) Date of publication of application: **07.12.2011**
(21) Application number: 10164768.3
(22) Date of filing: 02.06.2010
(51) Int. Cl.: G06F 3/033, G06F 3/03

(54) **Hand-held pointing device, software cursor control system and method for controlling a movement of a software cursor**

(71) Applicant: Fraunhofer-Gesellschaft zur Förderung der Angewandten Forschung e.V., 80686 München (DE)
(72) Inventor: Ruckhaeberle, Martin, 75217, Birkenfeld (DE); Schuetz, Christian, 76327, Pfinztal (DE); Geisler, Jürgen, 76135, Karlsruhe (DE)
(74) Representative: Stöckeler, Ferdinand

(57) **Abstract**

A hand-held pointing device (100) for controlling a movement of a software cursor comprises an acceleration detector (110) and an image capturing unit (120). The acceleration detector determines an inclination parameter, wherein the movement of the software cursor in a vertical direction is controllable based on the inclination parameter. Further, the image capturing unit records images within the visible spectral range, wherein the movement of the software cursor in a horizontal direction is controllable based on the recorded images.

## Description

### BACKGROUND OF THE INVENTION

Embodiments according to the invention relate to technical systems for controlling a software cursor and particularly a hand-held pointing device for controlling a movement of a software cursor, a software cursor control system for controlling a movement of a software cursor and a method for controlling a movement of a software cursor.

For interacting with the graphical user interface of a computer program, in general, classic input devices, such as computer mice, mechanical or optical, or input devices having touch-sensitive areas, so-called touchpads, are employed. These allow for reliable and intuitive interaction with the graphical user interface when the screens and/or projection areas are in immediate proximity of the user. The above input devices only offer limited interaction possibilities in the case of a great expanse of the projection area, such as in the case of a beamer presentation, or in the case of several projection areas distributed in space, such as in a control room and/or operation center. Here, such input systems oriented at natural interaction movements of the user, such as pointing with one's finger, offer some advantages. Such input systems are referred to as pointing systems in the following; those parts of the pointing system the user holds in their hands and moves for interaction are referred to as pointing devices.

Currently common pointing systems are, above all, so-called gyro mice, in which the hand movement of the user is detected by means of rotation-rate and inertial sensors, and the movement of the software cursor is calculated therefrom. Due to the sensor principle, only accelerated linear movements and rotational movements, but no steady linear movements can be detected directly, which is why the handling of these systems may be difficult, particularly with respect to the exact positioning of the software cursor. For improving the handling, systems with additional magnetic field sensor technology to detect the location of the pointing device relative to the direction of the earth's magnetic field are designed. Due to this principle, however, only the rotational position of the pointing device and the changes thereof can be detected with this, whereas linear movements also remaining unconsidered here.

Moreover, pointing systems having a camera arrangement in space, with which the position of a pointing object is detected relative to the projection area, will be dealt with. At present, such systems mostly are in the design phase.

What is described are pointing systems in which the position and the movement of body parts of the user, such as of their arm or head, or of a purely passive pointing object held in the user's hand are detected solely via a camera arrangement installed in space and having a camera or several cameras, and the movement of the software cursor is calculated therefrom. These systems require the installation of a camera arrangement in space as well as the calibration of this arrangement at least with respect to the respective spatial geometry, and hence a great installation effort. Furthermore, such systems necessitate special, usually intensive image evaluation methods, and hence computer components with high computation power. Due to the high requirements regarding the image evaluation algorithms in terms of robustness and on-line processing, such systems still are in development.

Furthermore, there are described pointing systems in which the user directs a light-emitting pointing device, for example a laser pointer, at the projection area, and the light spot falling from this pointing device onto the projection area is detected by a camera arrangement arranged in space and is evaluated for determining the location and/or change of location of the pointing device. In special forms of this type of system, the light emitted by the pointing device is modulated in space or time and demodulated correspondingly upon and/or after detection via the camera arrangement, in order to reduce spurious influences by extraneous light, among other things. In these example systems, there is also a basic disadvantage with respect to general applicability in that a camera arrangement has to be installed in space. Furthermore, it is a limitation of the application of such a pointing system that the light falling onto the projection area must be reflected sufficiently therefrom, and hence the applicability of the pointing system depends directly on the optical properties of the projection area. For example, the light emitted by a laser pointer is not reflected sufficiently by an LCD screen.

Furthermore, pointing systems in which image-detecting sensor technology, for example an area camera, is integrated in the hand-held pointing device are mentioned.

There are described pointing systems in which optical markers installed in space, particularly components emitting infrared light, are detected by the image-detecting sensor technology integrated in the hand-held pointing device, and the location and/or change of location of the pointing device is determined therefrom. Usually, the optical markers are in direct proximity of the projection area. If components emitting infrared light are used as optical markers, the image-detecting sensor technology of the pointing device is specially designed for detecting infrared light. From the field of computer games, there are known pointing systems in which the pointing device comprises triaxial acceleration sensor technology, apart from such image-detecting sensor technology. What is generally disadvantageous for the general employment of such a pointing system is the necessary installation of optical markers, particularly components emitting infrared light, at designated locations in space in a predefined configuration.

Furthermore, pointing systems in which the optical markers, which are detected by the image-detecting sensor technology integrated in the pointing device, are generated by the image-generating system itself, and projected onto the projection area, are mentioned.

There are described pointing systems in which the computer cursor itself is formed to be an optical marker. So that the software cursor can be recognized as part of the projected image, it is formed, in its shape or its temporal behavior, so that it can be distinguished from the actual image content. Furthermore, the cursor has an area structure, such that its spatial orientation can be determined from the image detected by the pointing device. With this, the direction in which the cursor must move on the projection area so as to follow the virtual pointing spot of the pointing device may then be determined. By analogy with the visible pointing spot of a laser pointer, the imaginary intersection of a straight line passing in pointing direction with the projection area is regarded as the virtual pointing spot here. Controlling the cursor movement takes place incrementally with on-line matching with the position of the virtual pointing spot. By way of this tracking cursor control in terms of regulation, it is guaranteed in this pointing system, in contrast to all other systems considered here, that the cursor always is in direct proximity of the virtual pointing spot and the pointing system behaves like a laser pointer in this respect. Disadvantages of this system concept consist in the fact that intensive image evaluation methods, which require a relatively high computation effort, and hence powerful computer components, must be employed for the robust recognition and measurement of the optical marker representing the cursor, in terms of reliable determination of the spatial orientation of the marker. Furthermore, it can be seen as a disadvantage that meanwhile generally used well-known forms of the cursor, which characterize forms of interaction determined depending on the context, are replaced by cursor forms unknown to the user and allowing for automatic detection of the cursor, and the interaction is made difficult thereby. Moreover, with respect to the robust automatic recognition capability and measurability, the size of the optical marker must be changed depending on the distance of the projection area, which poses the risk of potentially obscuring substantial image structures, such as parts of a graphical user interface, by the marker structure, and hence complicating interaction.

There are described pointing systems in which several optical markers are inserted in the projected image, which markers then are detected by the image-detecting sensor technology integrated in the pointing device. The shape of the optical markers and the arrangement of the markers in the image here are such that the markers detected in the image can be identified and the orientation of the pointing device relative to the projection area can be determined therefrom, even if the detected image includes only part of the projection area. The basic difficulty in such a system concept is to form the optical markers so that they are not perceived as disturbing by the viewer, but can still be detected automatically. According to the current state of research, this can only be achieved when utilizing light in a spectral range in which the human eye is insensitive, for example in the infrared range. However, this represents special requirements, particularly for the projection device, which must be capable of projecting image information both in the visible and the non-visible spectral range. Likewise, the image-detecting component in the pointing device must also be designed for detecting the non-visible light. Besides, intensive image evaluation methods, and hence powerful computer components, are also required here for robust, on-line recognition of the optical markers.

### SUMMARY OF THE INVENTION

It is the object of the present invention to provide an improved concept for controlling a movement of a software cursor to enable a reduction of the computational efforts and/or the hardware complexity and/or an improvement of the control accuracy and/or ease of use.

This object is solved by a hand-held pointing device according to claim 1, a software cursor control system according to claim 6 or a method for controlling a movement of a software cursor according to claim 14.

An embodiment of the invention provides a hand-held pointing device for controlling a movement of a software cursor comprising an inclination parameter sensor and an image capturing unit. The inclination parameter sensor is configured to determine an inclination parameter, wherein controlling the movement of the software cursor in a vertical direction is based on the inclination parameter. Further, the image capturing unit is configured to record image within the visible spectral range, wherein controlling the movement of the software cursor in a horizontal direction is based on the recorded images.

Embodiments according to the present invention are based on the central idea that the movement of a software cursor may be controlled by a hand-held pointing device being able to capture sensor data and image data. By using this combination of captured data, the computational effort for determining a control signal for controlling the movement of the software cursor may be significantly reduced, since the usage of a low-complexity image processing method for extracting the necessary control data from the recorded images may be sufficient, in comparison with known image based software cursor control systems working in the visible spectral range. In comparison to infrared based software cursor control systems, the inventive concept does not require markers. Further, in comparison to known sensor based software cursor control systems, the control accuracy and the ease of use may be significantly improved by using the inventive concept, since using additional image information may allow a more accurate determination of the control signal especially for steady linear movement.

Some embodiments according to the invention relate to a software cursor control system for controlling a movement of a software cursor comprising a hand-held pointing device and a software cursor control unit. The software cursor control unit may control the movement of the software cursor based on the inclination parameter and based on the recorded images. For this, the hand-held pointing device may transmit a control signal containing offset parameters for controlling a two-dimensional movement of the software cursor or a data signal containing both data of the inclination parameter and the recorded images to the software cursor control unit.

Embodiments according to the invention will be detailed subsequently referring to the appended drawings, in which:
- Fig. 1: is a block diagram of a hand-held pointing device;
- Fig. 2: is a schematic illustration of a software cursor control system;
- Fig. 3: shows a schematic illustration of an application of a hand-held pointing device; and
- Fig. 4: shows a flow chart of a method for controlling a movement of a software cursor.

In the following, the same reference numerals are partly used for objects and functional units having the same or similar functional properties and the description thereof with regard to a figure shall apply also to other figures in order to reduce redundancy in the description of the embodiments.

### DETAILED DESCRIPTION OF THE PREFERRED EMBODIMENTS

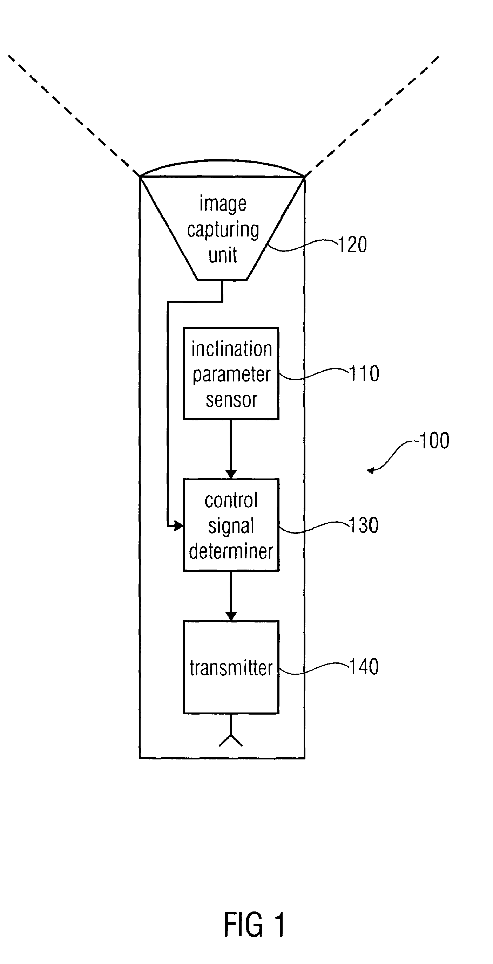

Fig. 1 shows a block diagram of a hand-held (or portable) pointing device 100 for controlling a movement of software cursor according to an embodiment of the invention. The hand-held pointing device 100 comprises an inclination parameter sensor 110 and an image capturing unit 120, wherein the inclination parameter sensor 110 determines an inclination parameter. The movement of the software cursor in a vertical direction is controllable based on the inclination parameter. Further, the image capturing unit 120 records images within the visible spectral range, wherein the movement of the software cursor in a horizontal direction is controllable based on the recorded images.

The inclination parameter may indicate, for example, an intensity of an acceleration of the hand-held pointing device and a direction of the acceleration. Since the inclination parameter sensor 110 is effected by the gravitational field all the time, an angle between the gravitational field and a pointing direction of the hand-held pointing device can be determined any time (also if the hand-held pointing device is not moved or steadily linear moved). Therefore, also a change of the angle of inclination can be determined, indicating a vertical movement of the hand-held pointing device. Based on this information, a vertical movement of the software cursor can be controlled. In this connection, for example, the pointing direction of the hand-held pointing device 100 may be equal to the direction, the image capturing unit records images. The recorded images or information obtained by analyzing the recorded images may be used to support, for example, a more accurate control of the vertical movement of the software cursor.

The inclination parameter sensor 110 may determine more than one inclination parameter for each time interval. For example, the inclination parameter sensor 110 may determine three acceleration parameters or magnetic field parameters, one for each direction in space.

Inclination parameter sensor in this case means each sensor capable of detecting an inclination of the hand-held pointing device 100 or a parameter, the inclination of the hand-held pointing device 100 can be determined from. In other words, the inclination of the hand-held pointing device 100 can be determined directly or by further calculations from the inclination parameter.

The inclination parameter sensor 110 may be realized, for example, as inclination parameter sensor, inertial sensor or magnetic field sensor.

Since a horizontal movement of the hand-held pointing device, especially steady linear movements, is difficult to detect by inclination parameter sensors, inertial sensors or magnetic field sensors, the recorded images of the image capturing unit 120 are used to control the movement of the software cursor in the horizontal direction. By using an image capturing unit 120 for the visible spectral range the hand-held pointing device 100 may be held in an arbitrary direction recording images of an arbitrary environment as long as the images contain enough texture for image processing methods. An orientation of the hand-held pointing device 100, so that an reproduction of the software cursor (e.g. by a monitor or a beamer) is located within an image range of the image capturing device 120 is not necessary. Further, no markers within the recorded images are necessary for extracting the information for controlling the movement of the software cursor. The determined inclination parameter or information obtained from the inclination parameter may be used to support, for example, a more accurate control of the software cursor. Further, since also the data of the inclination parameter sensor 110 is available, image corrections, as for example the correction of rotation between two recorded images, may be enabled with low computational complexity. Therefore, also a low complexity image processing method may be sufficient for obtaining the information for controlling the movement of the software cursor in the horizontal direction.

Summarizing, by using the inventive concept, the computational efforts and/or the hardware complexity can be reduced and/or the control accuracy and/or ease of use can be improved in comparison to known methods. Further, the movement of the software cursor can be controlled by the hand-held pointing device without requiring optical markers, additionally reducing the overall hardware efforts.

The inclination parameter sensor 110 may determine inclination parameters repeatedly as well as the image capturing unit may record images repeatedly, so that a real time control of the movement of the software cursor is enabled. In other words, the inclination parameter sensor 110 and the image capturing unit 120 may determine at least one inclination parameter and an image at continuous time intervals. For example, the inclination parameter sensor and the image capturing unit 120 may determine at least one inclination parameter and an image for at least twenty time intervals per second, so that a user has the impression of a smooth movement of the software cursor. Clearly, each second may be divided into more than twenty (e.g. 100, 200, or more) time intervals, an inclination parameter and an image is determined or recorded for. Optionally, they may be interpolated afterwards to reduce measurement and/or calculation errors.

The inclination parameter sensor 110 may be, for example, a triaxial inclination parameter sensor capable of detecting a steady component of accelerations. Due to this triaxial inclination parameter sensor, the angle of inclination can be determined also if the hand-held pointing device 100 is not moved or the hand-held pointing device 100 is moved continuously (steady linear movement). Further, also a rotation of the hand-held pointing device 100 about the pointing direction can be detected. This information may be used for compensating or correcting a rotation between successively recorded images. In this way, the effort for correcting the rotation between recorded images may be significantly reduced in comparison to a correction of the rotation only by image processing.

The image capturing unit 120 may be, for example, a digital camera or another device for recording images in the visible spectral range.

Additionally, the hand-held pointing device 100 may comprise a transmitter 140 as indicated in Fig. 1. The transmitter 140 may transmit a data signal containing data of the inclination parameter and the recorded images, for example, to a software cursor control unit for further processing. Alternatively, the transmitter 140 may transmit a control signal containing offset parameters for controlling a two dimensional movement of the software cursor. The offset parameters may be for example coordinates of a two-dimensional coordinate system (e.g. a rectangular coordinate system or a polar coordinate system). These offset parameters may be calculated by the hand-held pointing device 100 itself based on the inclination parameter and the recorded images. The transmitter may be a wired or a wireless transmitter, as for example a radio transmitter, a Bluetooth transmitter or a wireless local area network transmitter.

As mentioned, the hand-held pointing device 100 may transmit the determined inclination parameters and recorded image data directly or after low complexity preprocessing, as for example quantization, interpolation and/or coding of the inclination parameters and/or the recorded image data. Alternatively, the hand-held pointing device 100 may process the inclination parameters and the recorded images itself to determine a control signal. For this, the hand-held pointing device 100 may comprise a control signal determiner 130, as indicated in Fig. 1. The control signal determiner 130 may determine the control signal containing offset parameters for controlling a two-dimensional movement of the software cursor based on the inclination parameter and the recorded images as mentioned above. Determining the control signal directly at the hand-held pointing device 100 may allow to reduce the amount of data to be transmitted by the transmitter significantly. Especially transmitting the image data requires usually a large transmission rate. However, transmitting the inclination parameter and recorded image data or preprocessed inclination parameters and preprocessed recorded image data directly may reduce the power consumption and the hardware efforts for the hand-held pointing device. This may reduce the cost of the hand-held pointing device and may increase the battery lifetime of the hand-held pointing device 100.

In the example shown in Fig. 1, the inclination parameter sensor 110 and the image capturing unit 120 are connected to the optional control signal determiner 130 and the control signal determiner 130 is connected to the transmitter 140. A hand-held pointing device without control signal determiner 130 may comprise an image capturing unit 120 and an inclination parameter sensor 110 directly connected to the transmitter 140 or a preprocessor for quantization, interpolation and/or coding.

The inclination parameter sensor 110, the image capturing unit 120, the optional control signal determiner 130 and the transmitter 140 may be independent hardware units or part of a computer, microcontroller or digital signal processor or a computer program or software product for running on a computer or microcontroller.

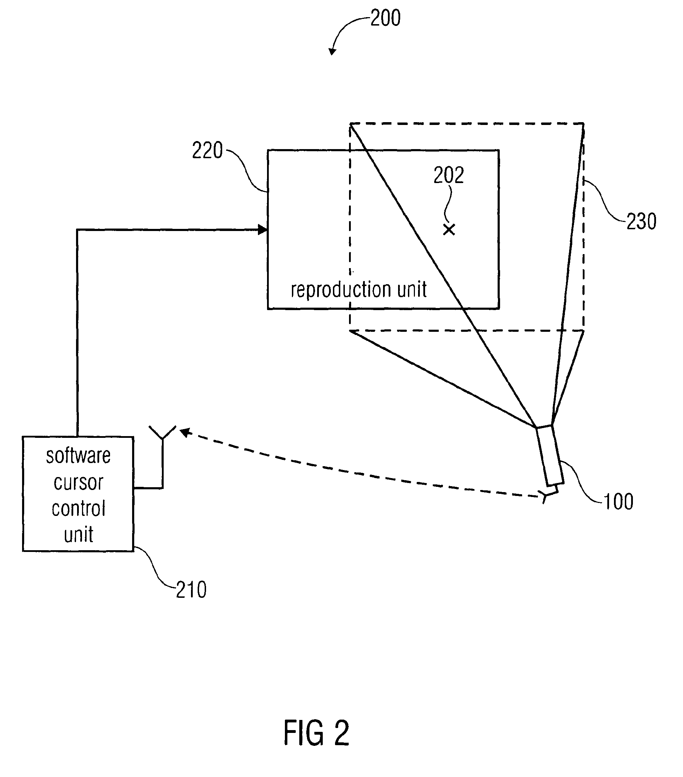

Fig. 2 shows a schematic illustration of a software cursor control system 200 for controlling a movement of a software cursor 202 according to an embodiment of the invention. The software cursor control system 200 comprises a hand-held pointing device 100 and a software cursor control unit 210. The hand-held pointing device 100 may be realized as mentioned above. The software cursor control unit may control the movement of the software cursor 202 based on the inclination parameter and based on the recorded images.

Further, the software cursor control system 200 may comprise a reproduction unit 220. The reproduction unit 220 may reproduce the movement of the software cursor 202 controlled by the software cursor control unit 210.

The software cursor control unit 210 may be, for example, a computer, a game console or a television set. The software cursor control unit 210 may be, for example, connected to the reproduction unit 220 or the software cursor control unit 210 may be part of the reproduction unit 220. The reproduction unit 220 may be a display, a monitor or a television set (as indicated in Fig. 2) as well as a beamer, for example.

Additionally, the software cursor control unit 210 may comprise a receiver to receive a control signal containing offset parameters for controlling a two-dimensional movement of the software cursor 202 or a data signal containing data of the inclination parameter and the recorded images from the hand-held pointing device 100.

In other words, the software cursor control unit 210 may receive a control signal containing parameters for controlling the movement of the software cursor 202 directly after, for example, optional decoding and or interpolation. Alternatively, the software cursor control unit 210 may receive a data signal containing data of the inclination parameter and the recorded images and may determine offset parameters for controlling the two-dimensional movement of the software cursor 202 by itself. For this, the software cursor control unit 210 may comprise a control signal determiner 130 similar to the control signal determiner mentioned for the hand-held pointing device 100 before.

In the example shown in Fig. 2, the hand-held pointing device 100 is positioned so that the software cursor 202 is located within the image range 230 of the image capturing unit of the hand-held pointing device 100. This illustrates a common application, since a user usually points to the software cursor 202 or in the direction of the software cursor 202, which should be controlled, although the inventive concept allows the user to point anywhere. This is a consequence of the marker-less concept (no optical markers are necessary for image processing or image evaluation).

The control signal or the data signal may be transmitted from the hand-held pointing device 100 to the software cursor control unit 210 by, for example, a radio transmitter as mentioned above.

The control signal determiner may be implemented at the hand-held pointing device or the software cursor control unit. It may analyze the recorded images and the inclination parameters and may provide offset parameters for controlling a two-dimensional movement of the software cursor. The offset parameters may be provided contained in a control signal. The offset parameters may indicate how the software cursor has to be moved to follow the movement of the hand-held pointing device 100. For example, they may be coordinates of a two-dimensional coordinate system and may be repeatedly provided by the control signal determiner based on repeatedly provided inclination parameters and recorded images. The offset parameters may indicate offsets from the last position of the software cursor or absolute position values. Alternatively, the offset parameters may also indicate a direction of movement and a velocity so that the software cursor is moved continuously in the direction of movement with the corresponding velocity until new direction of movement and velocity are available.

In the following, the realization of the control signal determiner is explained in more detail. This explanation is valid independent from whether the control signal determiner is implemented at the hand-held pointing device or the software cursor control unit.

The control signal determiner may determine the control signal (or the offset parameters) based on a two-dimensional signal correlation of recorded images, based on an optical flow of recorded images or based on a calculation and evaluation of local area image features of recorded images. The local area image features may be calculated based on a scale-in variant feature transformation or based on band-pass filtering and ensuing application of a monotony operator.

Further, the control signal determiner may low-pass filter the control signal over time to smooth the controlled movement of the software cursor. In other words, the differences between values of the offset parameters of successive time intervals may be smoothed by low-pass filtering to enable a more homogenous movement of the software cursor.

Additionally, the control signal determiner may analyze high frequency acceleration components of inclination parameters, the information obtained from the image processing or from the offset parameters to trigger an additional interaction functionality for controlling the movement of the software cursor. High frequency acceleration component means in this case a faster variation of the inclination parameter, of the information obtained by the image processing or of the offset parameters than occurring during an usual movement of the hand-held pointing device. For this, an acceleration limit may be preset for detecting the triggering of the additional interaction functionality. In this way, for example, the user may trigger the additional interaction functionality by shaking the hand-held pointing device. The additional interaction functionality may be for example moving the software cursor to a reset position or activating or deactivating the control of the movement of the software cursor by the hand-held pointing device.

In the following, the system will be explained in greater detail on the basis of some embodiments. For example, the pointing device comprises an image-capturing unit, which captures images in the visible range at a specific image repetition rate, for example at more than 20 images per second, as well as a triaxial acceleration parameter sensor (inclination parameter sensor), which detects steady components and alternating components of the accelerations in the three spatial directions.

The image series provided from the image-capturing unit may be evaluated such that, from two successive images each, the translatory shift of the two images with respect to each other is determined using the two-dimensional signal correlation, and the shift of the software cursor is determined therefrom by calculating with a translation factor. The translation factor may be determined in a calibration phase, as will be described further below. The two-dimensional signal correlation may offer the advantage of representing a known efficient method for robust shift estimation when using the Fourier transform, hence requiring a comparably small computation effort, wherein the algorithms are based on simple calculation rules that may be implemented efficiently on dedicated hardware. Due to the relatively low energy consumption of this hardware, it may be integrated in a pointing device supplied via battery cells.

When employing the two-dimensional signal correlation for shift estimation, there may be the basic problem that, when applying this method, it is implicitly assumed that the shift takes place in a purely translatory manner, with no changes in the rotational location occurring. With respect to the hand-guided movement of the pointing device, this condition is not satisfied, because the pointing device also experiences rotations about the longitudinal axis in pointing direction, and hence about an axis in parallel to the optical axis of the image-capturing unit, during handling. Hence, two images detected by the image-capturing unit each are not only shifted with respect to each other, but also rotated against each other. In order to deal with this problem, there are at least the two following possible solutions. The first possible solution consists in using (additional) sensor technology, which provides information on the absolute orientation of the pointing device, and hence can be used for detecting the rotational location and for compensating rotations about the longitudinal axis. In the second possible solution, the two-dimensional signal correlation is replaced by an image evaluation method based on area features, wherein a geometrical, for example affine, mapping of the area image features is calculated with respect to two images each, and the rotational location of the pointing device is detected and taken into account in the shift estimation in this way. With respect to the first possible solution, this second one requires a greater computation effort, and hence higher performance of the computer component, but is independent from (additional) sensor technology regarding the detection of the rotational location.

The use of 3-D (three-dimensional) sensor technology, for example a triaxial inclination parameter sensor, further allows for absolute control of the software cursor in vertical direction, simple calibration of the pointing system, as well as the application of specific interaction techniques. This will be dealt with in the following.

In the methodology described, the shift of the software cursor is determined from the shift of two images each detected via the image-capturing unit, wherein the shift vector is composed of a horizontal and a vertical component. Due to perspective distortions as well as method-induced inaccuracies, the shift determination has errors that integrate over time due to the incremental character of the method and hence lead to a basic drift. This drift makes itself felt by the fact that, among other things, when "tracing" a closed curve with the pointing device, the path of the controlled software cursor does not represent a closed curve. As a result, the drift may rise with increasing operation time. The accelerations detected by the triaxial inclination parameter sensor can be used to control the software cursor without drift in vertical direction. To this end, for example, from the steady component of the accelerations, the angle of inclination the longitudinal axis of the pointing device encloses with the horizontal is determined, and the vertical component of the cursor shift is calculated directly from the angle of inclination via the mathematical tangent function. Thus, the vertical shift of the software cursor is coupled directly to the angle of inclination, and basically is without any drift in this respect. The horizontal component of the cursor shift, however, basically cannot be acquired from the steady component of the accelerations, because no change of direction of the gravity vector takes place in the case of a corresponding rotation of the pointing device about its vertical axis with respect to the triaxial acceleration system. For this reasons, the horizontal component of the cursor shift may be acquired exclusively from the image information here, following compensation of the rotation of the pointing device about its longitudinal axis (pointing direction).

In traditional computer mice, no calibration process is required. The ratio of the magnitude of the cursor shift and the magnitude of the mouse shift relative to its base here is preadjusted by the manufacturer as a so-called translation factor and may be changed by the user by way of software. In the hand-held pointing device a calibration process may be required, wherein a functional connection f(d,phi) between the cursor shift d and the angle of inclination phi, on the one hand, and a translation factor with respect to the cursor shift and the shift determined from the image signals, on the other hand, is determined. For example, the functional connection *f(d,phi)* is required if the vertical component of the cursor shift is determined directly from the angle of inclination, the translation factor generally is required for determining the horizontal component of the cursor shift. For example, the calibration may be based on aligning the hand-held pointing device successively with two (or more) predefined points on the screen. The two points may lie above each other on the projection area and having a known vertical distance (e.g. the upper left and lower left corners of the projection area). The vertical distance can be measured on the basis of the pixel resolution of the projection area in a number of pixels. At the time instants at which the pointing device points to the reference points, image signals and acceleration signals are detected at the same time upon a keystroke. Then, from the images detected in the two time instants, the translatory shift of the images is determined, and the change in the angle of inclination of the pointing device with respect to the horizontal is determined from the accelerations detected at the two time instants. From these quantities, the functional connection between the cursor shift and the angle of inclination, on the one hand, as well as the translation factor with respect to the cursor shift and the shift determined from the image signals, on the other hand, may then be determined.

Depending on sensor and method parameters, such as sampling rates, image resolution, A/D converter resolution, etc., discretization effects, which may lead to subjectively irregular cursor movement, occur in the determination of the cursor shift. For this reason, for example, the computed values (offset parameters) of the cursor shift basically are low-pass filtered digitally over time, to which end a so-called IIR (infinite impulse response) filter may be employed advantageously. This achieves a subjectively calm cursor movement, allowing for exact positioning of the cursor.

The inclination parameter sensor technology integrated in the pointing device further offers the possibility of further forms of interaction. As such, higher-frequency acceleration components e.g. may be evaluated such that the cursor is set to a certain location of the projection area, such as the center of the area, upon shaking of the pointing device. With this, for example, a reset of the pointing system, such as upon increasing drift of the cursor, can be realized in a simple form.

Some embodiments of the invention relate to a multi-sensor pointing device (hand-held pointing device) for cursor control.

The invention relates to a technical system for controlling a software cursor on displays or display-like projection areas by means of a hand-guided pointing device, into which a camera as well as sensor technology for detecting the location and/or changes of location of the pointing device in the three-dimensional space are integrated.

Such a system may be employed for intuitive interaction with a graphical user interface of a computer program, wherein the system is used advantageously when the operation of the computer program by means of conventional input devices, such as a computer mouse, is made significantly more difficult and/or little intuitive due to the size and/or number of screens and/or screen-like projection areas or the distance of the user to these projection areas.

It is an object to develop further a pointing system for software-cursor-based interaction with a graphical user interface, which comprises a (hand-held) pointing device with an integrated image-detecting component, such that robust, quick and exact control of the software cursor becomes possible in an arbitrary arrangement of computer-controlled screens and/or projection areas at a comparably small computation effort.

Features of advantageous embodiments of the invention are the subject matter of the subclaims and can be taken from the description. Likewise, the features contained in the subclaims are the subject matter of the description.

According to the solution, a system according to the features of the described concept may be characterized in that the pointing device comprises both an image-capturing unit designed for the visible range and sensor technology for detecting the location and/or changes of location of the pointing device in the three-dimensional space, the latter also being abbreviated as 3-D sensor technology, wherein image signals and 3-D sensor signals are evaluated in combination, thereby achieving high robustness, speed, accuracy, and ease of use for the control of the software cursor, which cannot be achieved when only using either the image-capturing unit or the 3-D sensor technology. The 3-D sensor technology may here comprise acceleration, inertial and/or magnetic field sensor technology. The inventive concept thus combines the advantages of known sensor technology and methodology for image detection and evaluation, as well as detection and evaluation of accelerations, inertial forces and magnetic fields. Corresponding to their advantageous properties, image signals (data of recorded images) and 3-D signals (inclination parameter) each may be evaluated for partial tasks of the methodology for controlling the cursor position. Thus, the image signals may be evaluated, for example, primarily with regard to the determination of relative movements of pointing device and projection area, and the 3-D signals primarily with regard to the determination of the absolute orientation of the pointing device in space.

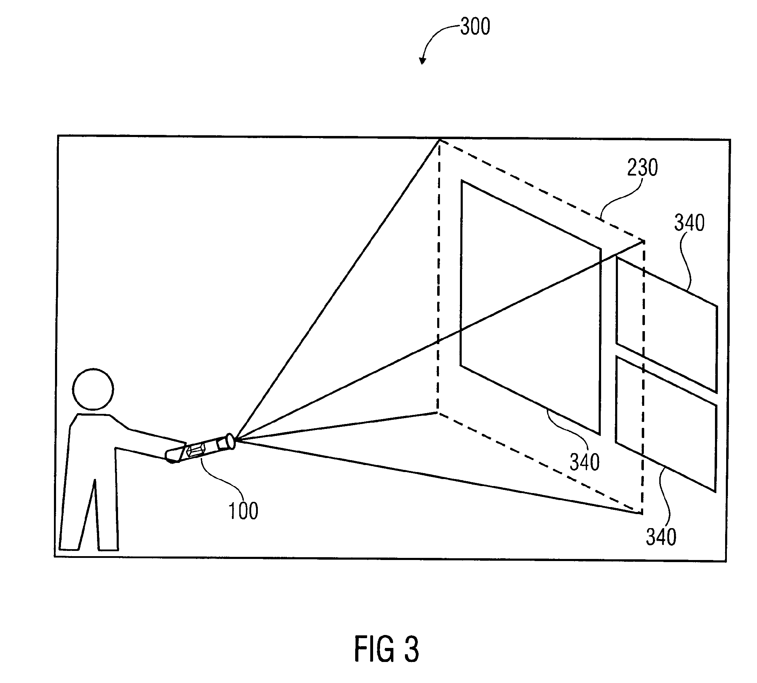

Fig. 3 shows an example of an application 300 of a hand-held pointing device 100 using the described concept. A user may point the hand-held pointing device 100 to the reproduction unit reproducing the software cursor (or a graphical reproduction of a software program containing a reproduction of a software cursor) or anywhere else as long as the image range 230 of the image capturing unit of the hand-held pointing device 100 contains enough texture 340 to be able to gain information especially about the horizontal movement of the hand-held pointing device 100 by image processing of the recorded images.

Some embodiments according to the invention relate to a system for software-cursor-based interaction with graphical user interfaces represented on screens or projection areas, by means of a hand-held pointing device comprising an image-capturing unit operating in the visible spectral range as well as further acceleration, inertial or magnetic-field sensors, characterized in that the image signals detected by the image-capturing unit and the signals detected by the acceleration, inertial or magnetic-field sensors are merged on-line, wherein the image signals are evaluated primarily for estimating translatory relative motions, and the signals from acceleration, inertial or magnetic-field sensors primarily for detecting the spatial orientation of the pointing device.

According to one aspect, the system is characterized in that a method of two-dimensional signal correlation is employed for evaluating the image signals. Alternatively, the system is characterized in that a method of determining an optical flow is employed for evaluating the image signals or that a method in which local area image features are calculated and evaluated is employed for evaluating the image signals. The determination of the local area image features may take place by means of a scale-invariant feature transform or the local area image features may be determined by means of band-pass filtering and ensuing application of so-called monotony operators.

According to another aspect, the system is characterized in that the pointing device comprises, in addition to the image-capturing unit, a triaxial inclination parameter sensor capable of detecting also the steady component of accelerations. The triaxial inclination parameter sensor may be employed in micromechanical form.

Further, the two-dimensional signal correlation may be employed for estimating the translatory relative motion of pointing device and projection area. Alternatively, the system may be characterized in that a method of determining the optical flow is employed for estimating the translatory relative motion of pointing device and projection area or that the image signal evaluation and the evaluation of acceleration, inertial or magnetic-field sensor technology are combined with respect to the calibration of the pointing system.

According to another aspect, the system may be characterized in that the image signal evaluation and the evaluation of the acceleration, inertial or magnetic-field sensor technology are combined with respect to the robustness, speed, accuracy, and ease of use of the pointing system.

Further, the system may be characterized in that high-frequency proportions of the signals from acceleration, inertial or magnetic-field sensor technology are evaluated with respect to triggering certain interactions, such as resetting the cursor position.

According to one aspect the system is characterized in that the computed values of the cursor shift are low-pass filtered digitally over time with respect to calm cursor motion with good positioning capability of the cursor. For this, for example, a digital IIR (infinite impulse response) filter may be employed for low-pass filtering the cursor shift.

According to another aspect the system is characterized in that higher-frequency acceleration components are evaluated for realizing further forms of interaction, such as resetting the cursor to a certain location of the projection area upon shaking of the pointing device.

In some embodiment of the invention the hand-held pointing device is a mobile phone. The mobile phone may comprise an inclination parameter sensor and an image capturing unit as described above.

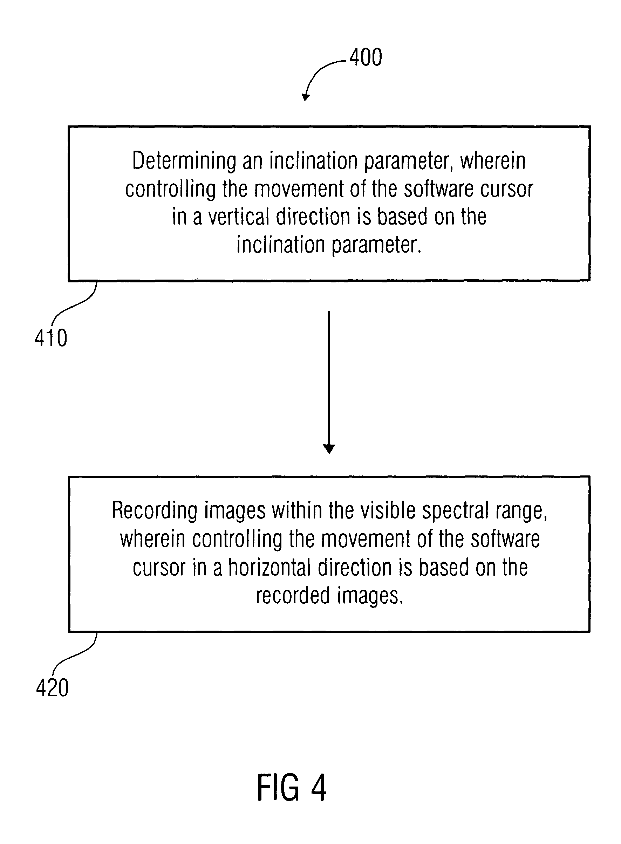

Fig. 4 shows a flow chart of a method 400 for controlling a movement of software cursor according to an embodiment of the invention. The method 400 comprises determining 410 an inclination parameter and recording 420 images within the visible spectral range. The movement of the software cursor in a vertical direction is controllable based on the inclination parameter and the movement of the software cursor in a horizontal direction is controllable based on the recorded images.

Although some aspects of the described concept have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. Hand-held pointing device (100) for controlling a movement of a software cursor comprising:
an inclination parameter sensor (110) configured to determine an inclination parameter, wherein controlling the movement of the software cursor in a vertical direction is based on the inclination parameter; and
an image capturing unit (120) configured to record images within the visible spectral range, wherein controlling the movement of the software cursor in a horizontal direction is based on the recorded images.

2. Hand-held pointing device according to claim 1, wherein the inclination parameter sensor (110) is configured to determine an inclination parameter repeatedly and the image capturing unit (120) is configured to record images repeatedly, so that the real time control of the movement of the software cursor is enabled.

3. Hand-held pointing device according to claim 1 or 2, wherein the acceleration detector (110) is a triaxial inclination parameter sensor capable of detecting a steady component of accelerations.

4. Hand-held pointing device according to one of the claims 1 to 3, further comprising a transmitter (140) configured to transmit a control signal containing offset parameters for controlling a two-dimensional movement of the software cursor or to transmit a data signal containing data of the inclination parameter and the recorded images.

5. Hand-held pointing device according to one of the claims 1 to 4, further comprising a control signal determiner (130) configured to determine a control signal containing offset parameters for controlling a two-dimensional movement of the software cursor based on the inclination parameter and the recorded images.

6. Software cursor control system (200) for controlling a movement of a software cursor comprising:
a hand-held pointing device (100) according to one of the claims 1 to 5; and
a software cursor control unit (210) configured to control the movement of the software cursor based on the inclination parameter and based on the recorded images.

7. Software cursor control system according to claim 6, further comprising a reproduction unit (220) configured to reproduce the movement of the software cursor controlled by the software cursor control unit (210).

8. Software cursor control system according to claim 6 or 7, wherein the software cursor control unit (210) comprises a receiver configured to receive a control signal containing offset parameters for controlling a two-dimensional movement of the software cursor or a data signal containing data of the inclination parameter and the recorded images from the hand-held pointing device (100).

9. Software cursor control system according to one of the claims 6 to 8, wherein the software cursor control unit (210) comprises a control signal determiner configured to determine a control signal containing offset parameters for controlling a two-dimensional movement of the software cursor based on the inclination parameter and the recorded images contained by a data signal.

10. Hand-held pointing device according to claim 5 or software cursor control system according to claim 9, wherein the control signal determiner (130) is configured to determine the control signal based on a two-dimensional signal correlation of recorded images, based on an optical flow of recorded images or based on a calculation and evaluation of local area image features of recorded images.

11. Hand-held pointing device according to claim 5 or 10 or software cursor control system according to claim 9 to 10, wherein the control signal determiner (130) is configured to correct a rotation about a pointing direction of the hand-held pointing device (100) between two recorded images based on the inclination parameter.

12. Hand-held pointing device according to one of the claims 5 or 10 to 11 or software cursor control system according to one of the claims 9 to 11, wherein the control signal determiner (130) is configured to low-pass filter the control signal over time to smooth the controlled movement of the software cursor.

13. Hand-held pointing device according to one of the claims 5 or 10 to 12 or software cursor control system according to one of the claims 9 to 12, wherein the control signal determiner (130) is configured to analyze high-frequency acceleration components to trigger an additional interaction functionality for controlling the movement of the software cursor.

14. Method (400) for controlling a movement of a software cursor comprising:
determining (410) an inclination parameter, wherein controlling the movement of the software cursor in a vertical direction is based on the inclination parameter; and
recording (420) images within the visible spectral range, wherein controlling the movement of the software cursor in a horizontal direction is based on the recorded images.

15. Computer program with a program code for performing the method according to claim 14, when the computer program runs on a computer or microcontroller.

## Amended claims

### Amended claims in accordance with Rule 137(2) EPC.

**1.** Hand-held pointing device (100) for controlling a movement of a software cursor comprising:
an inclination parameter sensor (110) configured to determine an inclination parameter, wherein controlling the movement of the software cursor in a vertical direction is based on the inclination parameter; and
an image capturing unit (120) configured to record images within the visible spectral range, wherein controlling the movement of the software cursor in a horizontal direction is based on the recorded images.

**2.** Hand-held pointing device according to claim 1, wherein the inclination parameter sensor (110) is configured to determine an inclination parameter repeatedly and the image capturing unit (120) is configured to record images repeatedly, so that the , real time control of the movement of the software cursor is enabled.

**3.** Hand-held pointing device according to claim 1 or 2, wherein the inclination parameter sensor (110) is a triaxial inclination parameter sensor capable of detecting a steady component of accelerations.

**4.** Hand-held pointing device according to one of the claims 1 to 3, further comprising a transmitter (140) configured to transmit a data signal containing data of the inclination parameter and the recorded images.

**5.** Hand-held pointing device according to one of the claims 1 to 4, further comprising a control signal determiner (130) configured to determine a control signal containing offset parameters for controlling a two-dimensional movement of the software cursor based on the inclination parameter and the recorded images, and further comprising a transmitter (140) configured to transmit the control signal containing offset parameters for controlling a two-dimensional movement of the software cursor.

**6.** Software cursor control system (200) for controlling a movement of a software cursor comprising:
a hand-held pointing device (100) according to one of the claims 1 to 5; and
a software cursor control unit (210) configured to control the movement of the software cursor based on the inclination parameter and based on the recorded images.

**7.** Software cursor control system according to claim 6, further comprising a reproduction unit (220) configured to reproduce the movement of the software cursor controlled by the software cursor control unit (210).

**8.** Software cursor control system according to claim 6 or 7, wherein the software cursor control unit (210) comprises a receiver configured to receive a control signal containing offset parameters for controlling a two-dimensional movement of the software cursor based on the inclination parameter and the recorded images or a data signal containing data of the inclination parameter and the recorded images from the hand-held pointing device (100).

**9.** Software cursor control system according to claim 8, wherein the software cursor control unit (210) comprises a control signal determiner configured to determine a control signal containing offset parameters for controlling a two-dimensional movement of the software cursor based on the inclination parameter and the recorded images contained by the data signal.

**10.** Hand-held pointing device according to claim 5 or software cursor control system according to claim 9, wherein the control signal determiner (130) is configured to determine the control signal based on a two-dimensional signal correlation of recorded images, based on an optical flow of recorded images or based on a calculation and evaluation of local area image features of recorded images.

**11.** Hand-held pointing device according to claim 5 or 10 or software cursor control system according to claim 9 to 10, wherein the control signal determiner (130) is configured to correct a rotation about a pointing direction of the hand-held pointing device (100) between two recorded images based on the inclination parameter.

**12.** Hand-held pointing device according to one of the claims 5 or 10 to 11 or software cursor control system according to one of the claims 9 to 11, wherein the control signal determiner (130) is configured to low-pass filter the control signal over time to smooth the controlled movement of the software cursor.

**13.** Hand-held pointing device according to one of the claims 5 or 10 to 12 or software cursor control system according to one of the claims 9 to 12, wherein the control signal determiner (130) is configured to analyze high-frequency acceleration components to trigger an additional interaction functionality for controlling the movement of the software cursor.

**14.** Method (400) for controlling a movement of a software cursor comprising:
determining (410) an inclination parameter, wherein controlling the movement of the software cursor in a vertical direction is based on the inclination parameter; and
recording (420) images within the visible spectral range, wherein controlling the movement of the software cursor in a horizontal direction is based on the recorded images.

**15.** Computer program with a program code for performing the method according to claim 14, when the computer program runs on a computer or microcontroller.
